# EUROPÄISCHE PATENTSCHRIFT

(11) **EP 1 621 863 B1**
(45) Veröffentlichungstag und Bekanntmachung des Hinweises auf die Patenterteilung: **29.06.2011**
(21) Anmeldenummer: 05015863.3
(22) Anmeldetag: 21.07.2005
(51) Int. Cl.: G01M 3/18, G01M 3/28

(54) **Vorrichtung zur Erfassung einer Leckage**
Device for detecting a leakage
Dispositif de détection d'une fuite

(30) Priorität: 26.07.2004 DE 102004036200; 18.08.2004 DE 102004040106
(43) Veröffentlichungstag der Anmeldung: 01.02.2006
(73) Patentinhaber: Carl Freudenberg KG, 69469 Weinheim (DE)
(72) Erfinder: Brüggemann, Guido, 2502 Biel (CH); Bock, Eberhard, 69509 Mörlenbach (DE)

(56) Entgegenhaltungen:
- WO-A-86/05880
- DE-A1- 10 061 111
- DE-A1- 19 613 934
- DE-C2- 19 653 117
- DE-U- 1 911 255
- US-A1- 2003 015 840

## Beschreibung

### Technisches Gebiet

Die Erfindung befasst sich mit einer Vorrichtung zur Erfassung einer Leckage mit einem Depot zur Aufnahme der Leckage.

Für das Abdichten von Wellen oder auch Stangendurchführungen sind verschiedene Dichtungen bekannt. Dabei werden Radialwellendichtringe, Gleitring-Dichtungen und andere eingesetzt. Allen Dichtungen gemeinsam ist, dass sie Verschleißartikel sind und bei einem Verlust der Dichtfunktion auszutauschen sind. Eine Leckage ist in aller Regel zu verhindern, weil hierdurch in einer Reihe von Anwendungsfällen beispielsweise durch Trockenlaufen eines Getriebes, großer Schaden entstehen kann. Es besteht deshalb die Forderung, eine ungewollte Leckage rechtzeitig zu erkennen und die defekte Dichtung eventuell auszuwechseln.

### Stand der Technik

Aus dem Gebrauchsmuster G 91 01 497.2 ist für eine Kolbenstange mit einer Kolbenstangenführung eine Leckageerfassung bekannt geworden, bei der ein Raum zwischen zwei Dichtungsringen gebildet wird, an den ein die Leckflüssigkeit erfassender Sensor angeschlossen ist. Die Dichtringe sind in entsprechende Ringnuten der Kolbenstangenführung eingefügt. Eine solche Leckageerfassung ist deshalb konstruktiv in das zu überwachende technische Gerät einzuarbeiten. Eine universelle Verwendung ist nicht gegeben.

Eine andere Möglichkeit der Leckageerfassung ist in der WO 98/54559 gezeigt. Dort wird ein Tropfenfänger verwendet, der mit einem schräg verlaufenden Kanal versehen ist und wenigstens einen elektrischen Sensor zur Fassung der einzelnen Tropfen die durch den Kanal fließen, versehen ist. Solche Detektoren können zwar universell eingesetzt werden, eignen sich jedoch nur für die Erfassung von Flüssigkeitsmengen die zumindest in Tropfengröße vorliegen.

Eine Möglichkeit eine Leckage bereits am Ort ihrer Entstehung zu erkennen, das heißt auch kleinste Leckagen festzustellen, ist durch die DE 100 61 111 A1 gegeben. Dort wird die Dichtung selbst mit einem Depot versehen, dass bei Kontakt mit einem Fluid seine optischen Eigenschaften verändert wobei diese Veränderungen durch ein optisches System erfasst werden. Das Depot besteht aus einem saugfähigen Material, zum Beispiel einem Vlies, Filz, Gewebe, Schwamm oder dergleichen.

In Fortführung des voranstehenden Standes der Technik ist durch die ältere DE 103 14 924 A1 eine Dichtungsanordnung bekannt geworden, bei der der Dichtring mit einem Depot zur Aufnahme der Leckage versehen ist, wobei die Messvorrichtung durch einen Kondensator gebildet ist, bei dem das Depot als Dielektrikum dient.

### Darstellung der Erfindung

Der Erfindung liegt die Aufgabe zu Grunde, eine universell einsetzbare Vorrichtung zur Erfassung einer Leckage zu schaffen, die in ihrem Aufbau einfach gehalten ist, kostengünstig hergestellt werden kann und die darüber hinaus eine sichere Anzeige auch geringster Mengen an Leckage ergibt.

Die Lösung der gestellten Aufgabe erfolgt mit den Merkmalen des Anspruches 1.

Gemäß der Erfindung wird das die Leckage aufnehmende Depot durch ein gesondertes, in ummittelbarer Nähe des Leckageaustritts anbringbares Element gebildet, das mit wenigstens einem Kapillarspalt oder einer saugfähigen Einlage versehen ist und mindestens einen Sensor hat, welcher die im Kapillarspalt, beziehungsweise in der Einlage erfasste Leckage misst und einer Auswerte- und Signaleinheit übermittelt. Als Einlage wird vorzugsweise ein saugfähiger Vliesstoff verwendet. Ein solches Depot mit Signaleinheit kann in der Nähe des Leckageaustritts angebracht werden und jedwelche Leckageerscheinungen der Auswerte- und Signaleinheit übermitteln. Hiemach können entsprechende Maßnahmen zur Behebung der Leckage eingeleitet werden.

Die Vorrichtung kann zur Erfassung einer Leckage an Dichtungen technischer Geräte, insbesondere an einer eine Welle oder eine Stange umschließenden Dichtung verwendet werden.

Die bevorzugte Ausbildung des Depots sieht vor, dass es mit einem oder mehreren Sensoren versehen wird, welche zunächst bei einem ersten Auftreten einer Leckage und danach bei Erreichen eines vorgegebenen Füllstandes Wamsignale auslösen. Durch diese Maßnahme wird der Austausch der Dichtung planbar. Es wird nicht nur die Leckage angezeigt als solche, sondern es kann der zeitliche Verlauf der Leckage ermittelt werden und hiervon ausgehend entsprechende Gegenmaßnahmen geplant und durchgeführt werden. Ober ein entsprechendes Anzeigegerät kann beispielsweise nach Auftreten einer ersten Leckage ein erstes optisches oder akustisches Warnsignal ausgelöst werden. Nach Erreichen eines vorgegebenen Füllstandes im Depot wird über das Anzeigegerät ein zweites optisches oder akustisches Warnsignal ausgelöst. Um dieses zu erreichen, werden Sensoren verwendet, welche die durch die Leckage auftretenden Veränderungen am Depot erkennen. Der Einsatz unterschiedlicher Sensoren ist möglich, unter anderem auch von Sensoren, die aus direkt auf die Leckage reagierenden Halbleiterelementen bestehen.

Es ist vorteilhaft, wenn das Depot für die Aufnahme einer bestimmten Leckagemenge ausgelegt ist, so dass die eventuell zu erwartende Leckage aufgefangen werden kann. Gegebenenfalls ist es günstig, wenn das Depot mit einem Temperatursensor versehen ist, um die Temperatur im Dichtungsbereich zusätzlich zu erfassen.

Bevorzugt wird der Sensor oder die Sensoren im Depot selbst integriert. Beispielsweise ist es möglich, dass bei einem Element mit einer Einlage die Einlage aus einem quellfähigen Material besteht dessen Volumenzunahme detektiert wird. Die Volumenzunahme kann beispielsweise einen elektrischen Schalter betätigen und dadurch ein Signal schalten. Möglich ist auch ein Element zu verwenden, bei dem der Kapillarspalt zwischen zwei eng nebeneinander liegenden Kondensatorplatten gebildet wird.

Da die Vorrichtung möglichst klein bauen soll, können im Bedarfsfall am Depot Leitelemente angebracht werden, welche die Leckage dem Kapillarspalt beziehungsweise der Einlage zuleiten.

Die Auswerte- und Signaleinheit wird aus einer programmierbaren oder im Bedarfsfalle auch aus einer nicht programmierbaren elektronischen Einheit gebildet.

Die Stromversorgung der Auswerteeinheit kann durch eine externe oder integrierte Stromquelle oder durch einen mit der drehenden Welle verbundenen Generator erfolgen. Möglich ist auch die Stromversorgung der Auswerteeinheit durch einen auf der drehenden Welle aufgesetzten Magneten zu erreichen der im Zusammenspiel mit einer statischen Spuleneinheit Strom induziert.

### Kurzbeschreibung der Zeichnung

Anhand mehrerer Ausführurrgsbeispiele wird die Erfindung nachstehend näher erläutert.

Es zeigt:
- Figur 1: Den prinzipiellen Aufbau der Vorrichtung angewendet bei einer Wellendurchführung,
- Figur 2: eine Draufsicht auf das Ausführungsbeispiel nach Figur 1,
- die Figuren 3 bis 8: verschiedener Ausführungen des Depotelements und
- Figur 9: ein Depotelement mit Leitelementen für die Leckageflüssigkeit.

### Ausführung der Erfindung

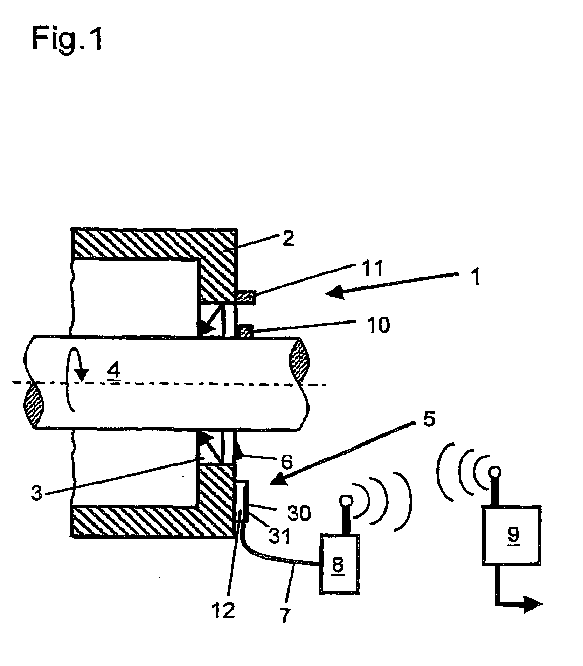

In der Figur 1 ist der prinzipielle Aufbau der Vorrichtung 1 am Beispiel einer Wellendurchführung durch ein Gehäuse 2 mit einer Dichtung 3 dargestellt. Die Welle 4 wird durch die Dichtung 3 abgedichtet. Unterhalb der Welle 4 ist das Depot 5 angebracht und zwar an der Stelle, an der der Leckageaustritt 6 zu erwarten ist. Das Depot 5 ist über das Kabel 7 mit der Auswerteeinheit 8 verbunden. Letztere übermittelt ein Signal an den Empfänger 9, der seinerseits je nach Füllstandsituation im Depot 5 und dem damit übermitteltem Signal ein Warnsignal auslöst beziehungsweise in einer Anzeige die aufgetretene Leckage anzeigt. Das Depot 5 besteht aus einem Element 30, das einen Kapillarspalt 18 aufweist oder eine saugfähige Einlage 12 hat und ist mit mindestens einem Sensor 31 versehen, welcher die im Kapillarspalt 18 beziehungsweise in der Einlage 12 aufgetretene Leckage misst und der Auswerte- und Signaleinheit 8 übermittelt. Zur Stromversorgung für die Auswerteeinheit 8 kann auf der Welle 4 ein Magnet 10 aufgesetzt sein, der in Zusammenwirken mit der am Gehäuse 2 angebrachten Spuleneinheit 11 einen Strom induziert. Die Auswerteeinheit 8 sendet ein Signal an das Anzeigegerät 9, das ein Warnsignal auslöst.

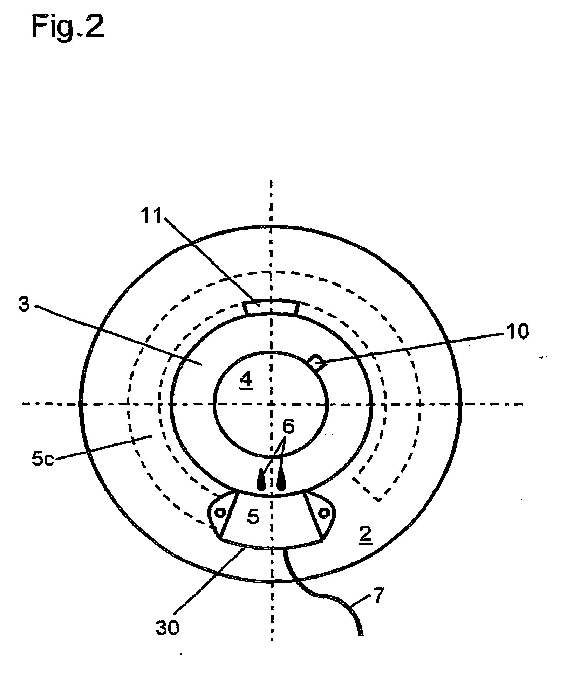

Die Figur 2, zeigt die Ausführungsform nach Figur 1 in der Draufsicht. Hier ist die Anordnung des Magneten 10 und der Spuleneinheit 11 sichtbar. Darüber hinaus auch die Anbringung und Größenordnung des Depots 5. Das Depot 5 ist um die Welle herum geführt, 5c. Dies hat den Vorteil, dass auch die Leckage 6 eines Geräts das seine räumliche Lage ändern kann, sicher erfasst wird und nicht am Depot 5 vorbertropft.

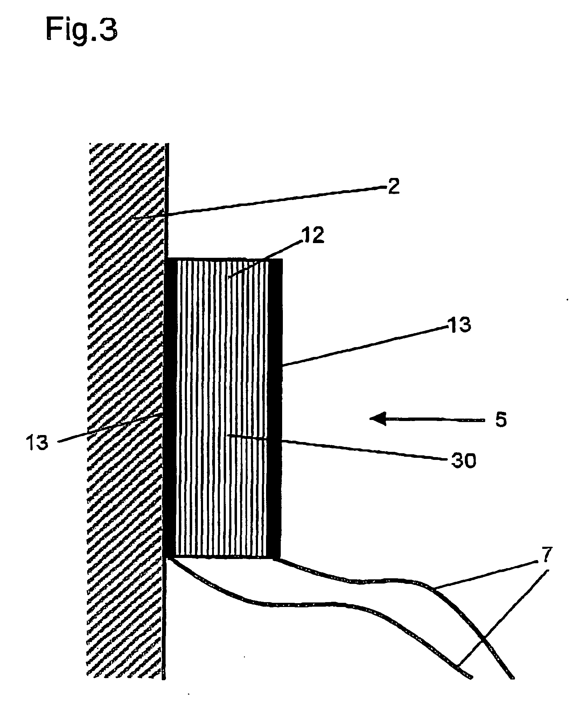

Die Figuren 3 bis 8 zeigen verschiedene Ausführungsformen für die Depots 5. So zeigt die Figur 3 ein Depot 5 bei dem das Depotelement 30 eine saugfähige Einlage 12 aus einem saugfähigen Vliesstoff hat. Der Vliesstoff ist durch zwei elektrisch leitende, nicht miteinander leitend verbundene Schichten 13 eingeschlossen ist. Die Schichten 13 bilden einen Plattenkondensator, dessen Dielektrikum aus dem Vliesstoff 12 besteht. Die Leckage wird durch Messen der Dielektrizitätkonstanten oder durch dielektrische Spektroskopie erfasst. Die Signalhöhe und -charakteristik ist auch ein Signal für den Füllstand des Depots 5, so dass Aussagen über die Leckagemenge gemacht werden können. Damit lässt sich abschätzen, wann das Leckagedepot 5 voll ist und eine Leckage nach außen abtropfen wird.

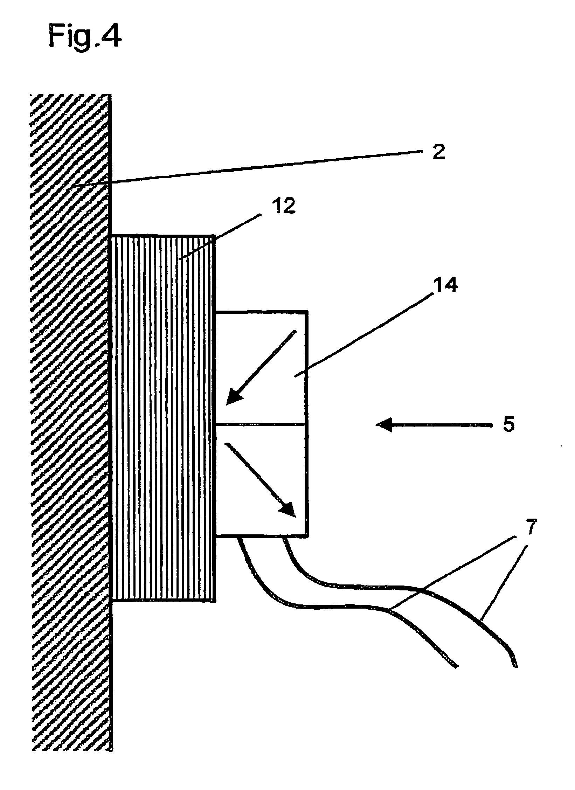

Die Ausführungsform nach der Figur 4 hat ebenfalls eine Einlage 12 aus einem Vliesstoff. Für den Messvorgang der Leckage wird jedoch ein optischer Sensor 14 verwendet, welcher die Veränderung im Reflexionsvermögen des Vliesstoffes in ein Signal umwandelt.

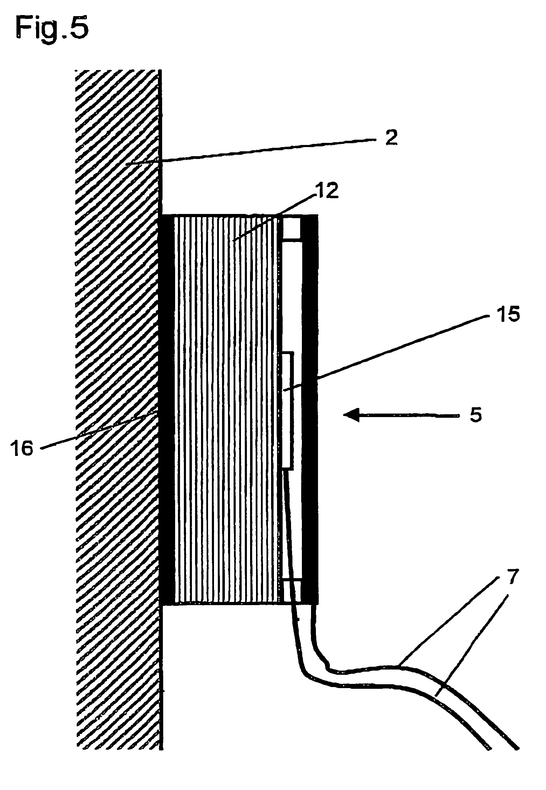

Die Figur 5 zeigt eine Ausführungsform mit einem Vliesstoff 12, dessen Volumenzunahme durch die Leckage den elektrischen Schalter 15 betätigt. In diesem Fall kann das Depot 5 über den Magneten 16 am Gehäuse 2 befestigt sein.

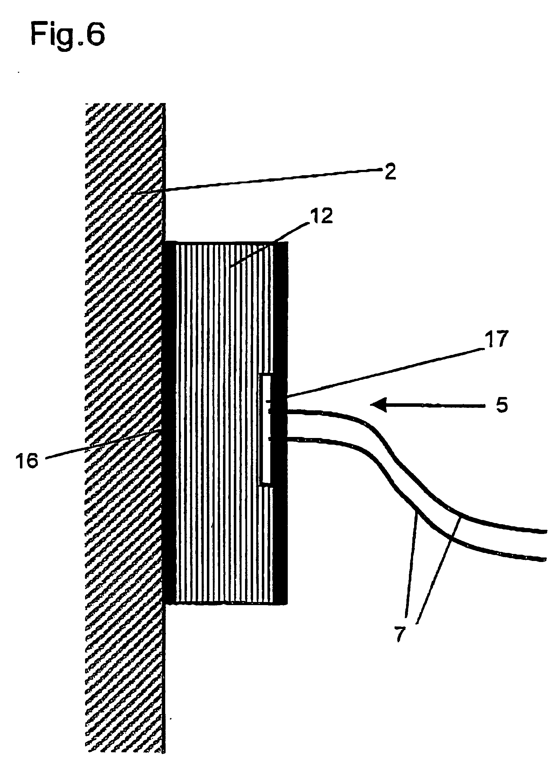

Eine sehr einfache Ausführungsform zeigt die Figur 6, bei der das Depot 5 mit dem Halbleiterelement 17 ausgestattet ist, dass auf die Leckage reagiert und der Auswerteeinheit 8 ein Signal übermittelt.

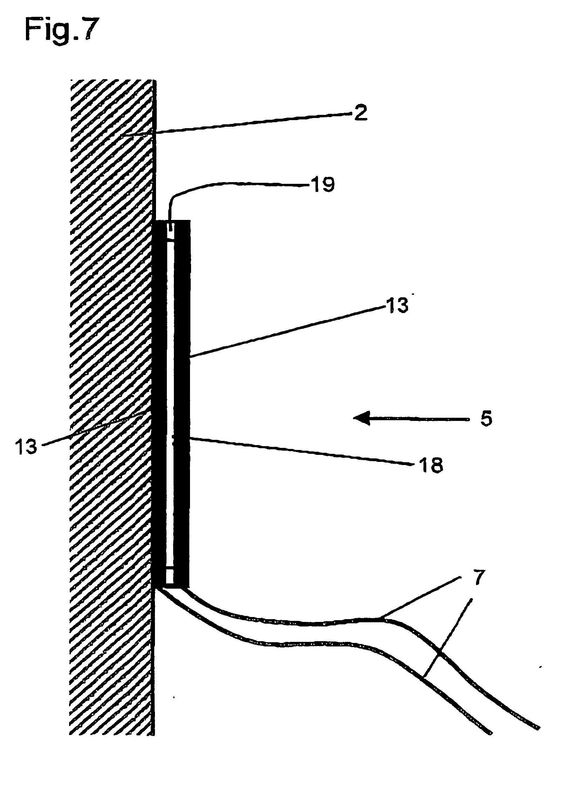

Bei der Ausgangsform nach Figur 7 ist das Depot 5 mit einem Element 30 versehen, das einen Kapillarspalt 18 aufweist. Der Kapillarspalt 18 bildet einen Hohlraum, der durch zwei eng nebeneinander angebrachte Kondensatorplatten 13 begrenzt ist, die durch die Isolatoren 19 voneinander getrennt sind. Der Abstand ist so gering, dass die Leckage durch Kapllarkräfte im Depot 5 gehalten wird.

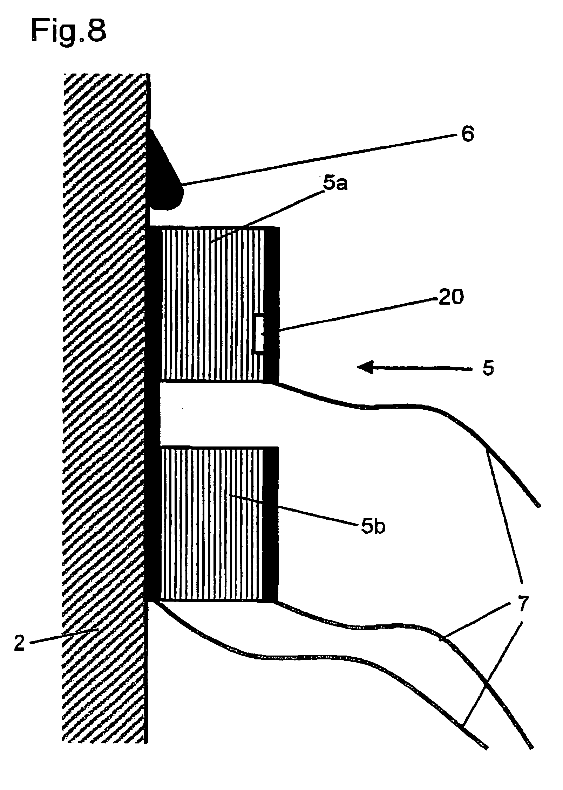

Die Figur 8 zeigt schließlich eine Möglichkeit auf, bei der voneinander getrennte Depots 5a und 5b vorhanden sind. Die Depots 5a und 5b sind übereinander angeordnet, so dass eine Leckage 6 zunächst das Depot 5a füllt und von dort erst in das Depot 5b gelangt, Dies bietet eine gute Möglichkeit, den zeitlichen Verlauf der Leckage zu erfassen. In diesem Ausführungsbeispiel ist auch ein Temperatursensor 20 im Depot 5a eingefügt, der eine Überwachung der Betriebstemperatur ermöglicht.

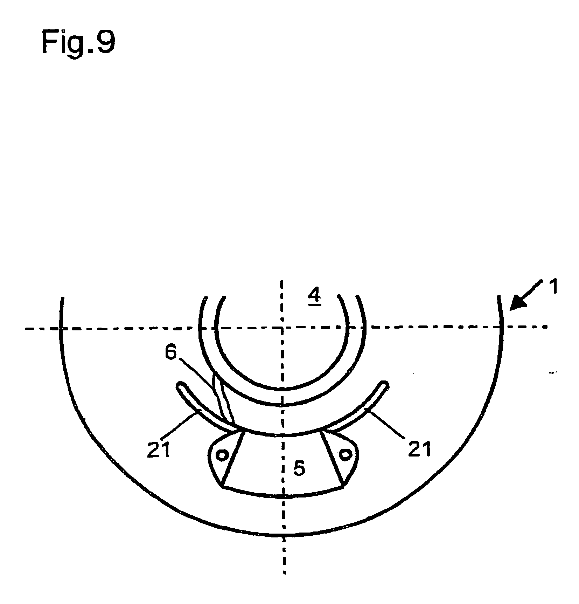

In Figur 9 ist vergleichbar mit Figur 2 eine Draufsicht auf die Vorrichtung 1 gezeigt, wobei das Depot 5 mit den Leitelementen 21 versehen ist, welche die Leckage 6 dem im Depot 5 enthaltenen Kapillarspalt 18 beziehungsweise der Einlage 12 zuführen.

## Patentansprüche

1. Vorrichtung mit einem Depot zur Erfassung einer Leckage, wobei das Depot ein gesondertes in unmittelbarer Nähe des Leckageaustrittes anbringbares Element mit mindestens einem im Depot integrierten Sensor ist, welcher die im Depot aufgetretene Leckage misst, und dass das Element (30) wenigstens einen Kapillarspalt (18) oder eine saugfähige Einlage (12) hat und der Sensor (31, 13, 14, 15, 17) die im Kapillarspalt (18) beziehungsweise der Einlage (12) aufgetretene Leckage misst und die gemessenen Werte einer Auswerte- und Signaleinheit (8) übermittelt, **dadurch gekennzeichnet, dass** sie aus einer elektronischen Einheit besteht und mit dem Depot (5) zu einem Bauelement zusammen gefasst ist.

2. Vorrichtung nach Anspruch 1, **dadurch gekennzeichnet, dass** die Stromversorgung der Auswerteinheit (8) durch einen mit der drehenden Welle verbundenen Generator erfolgt.

3. Vorrichtung nach Anspruch 1, **dadurch gekennzeichnet, dass** die Stromversorgung der Auswerteinheit (8) durch einen auf einer drehenden Welle (4) aufgesetzten Magneten (10) erfolgt, der im Zusammenspiel mit einer statischen Spuleneinheit (11) Strom induziert.

4. Vorrichtung nach einem der Ansprüche 1 bis 3, **dadurch gekennzeichnet, dass** die Signale der Auswerteeinheit (8) drahtlos an ein Anzeigegerät (9) übermittelt werden.

5. Vorrichtung nach einem der Ansprüche 1 bis 4, **dadurch gekennzeichnet, dass** das Depot (5) mit einem oder mehreren Sensoren (31, 13, 14, 15, 17) versehen ist, welcher beziehungsweise welche zunächst beim Auftreten einer ersten Leckage (6) und danach bei Erreichen eines vorgegebenen Füllstandes optische oder akustische Warnsignale auslöst beziehungsweise auslösen.

6. Vorrichtung nach einem der Ansprüche 1 bis 5, **dadurch gekennzeichnet, dass** das Depot (5) einen Kapillarspalt (18) hat, der zwischen zwei eng nebeneinander liegenden Kondensatorplatten (13) gebildet ist.

7. Vorrichtung nach einem der Ansprüche 1 bis 5 **dadurch gekennzeichnet, dass** das Depot (5) eine saugfähige Einlage (12) hat.

8. Vorrichtung nach Anspruch 8, **dadurch gekennzeichnet, dass** die Einlage (12) durch einen saugfähigen Vliesstoff gebildet ist.

9. Vorrichtung nach einem der Ansprüche 1 bis 8, **dadurch gekennzeichnet, dass** als Sensoren direkt auf die Leckage (6) reagierende Halbleiterelemente (17) eingesetzt werden.

10. Vorrichtung nach einem der Ansprüche 1 bis 9, **dadurch gekennzeichnet, dass** das Depot (5) für die Aufnahme einer bestimmten Leckagemenge ausgelegt ist,

11. Vorrichtung nach einem der Ansprüche 1 bis 10, **dadurch gekennzeichnet, dass** das Depot (5) einen Temperatursensor (20) hat.

12. Vorrichtung nach einem der Ansprüche 1 bis 11, **dadurch gekennzeichnet, dass** bei einem Element (30) mit einer Einlage (12) aus einem quellfähigen Material dessen Volumenzunahme detektiert wird.

13. Vorrichtung nach Anspruch 12, **dadurch gekennzeichnet, dass** durch die Volumenzunahme ein elektrischer Schalter (15) betätigt wird.

14. Vorrichtung nach einem der Ansprüche 1 bis 13, **dadurch gekennzeichnet, dass** das Depot (5) mit Leitelementen (21) versehen ist, welche die Leckage dem Kapillarspalt (18) beziehungsweise der Einlage (12) zuleiten.

15. Verwendung einer Vorrichtung nach einem der Ansprüche 1 bis 14, zur Erfassung einer Leckage an Dichtungen technischer Geräte, insbesondere an einer eine Welle oder eine Stange umschließenden Dichtung.

## Claims

1. Apparatus having a means for detection of a leak, wherein the means is a separate element which can be fitted in the immediate vicinity of the leak outlet and has at least one sensor which is integrated in the means and measures the leak occurring in the means, the element (30) has at least one capillary gap (18) or an insert (12) with a suction capability, and the sensor (31, 13, 14, 15, 17) measures the leak occurring in the capillary gap (18) or in the insert (12) and transmits the measured values to an evaluation and signal unit (8), **characterized in that** the apparatus consists of an electronic unit and is combined with the means (5) to form a component.

2. Apparatus according to Claim 1, **characterized in that** the electrical power supply for the evaluation unit (8) is provided by a generator which is connected to the rotating shaft.

3. Apparatus according to Claim 1, **characterized in that** the electrical power supply for the evaluation unit (8) is provided by a magnet (10) which is placed on a rotating shaft (4) and induces current by interaction with a static coil unit (11).

4. Apparatus according to one of Claims 1 to 3, **characterized in that** the signals from the evaluation unit (8) are transmitted without the use of wires to a display unit (9).

5. Apparatus according to one of Claims 1 to 4, **characterized in that** the means (5) is provided with one or more sensors (31, 13, 14, 15, 17) which first of all resolves or resolve visual or audible warning signals when a first leak (6) occurs, and subsequently when a predetermined filling level is reached.

6. Apparatus according to one of Claims 1 to 5, **characterized in that** the means (5) has a capillary gap (18) which is formed between two closely mutually adjacent capacitor plates (13).

7. Apparatus according to one of Claims 1 to 5, **characterized in that** the means (5) has an insert (12) with a suction capability.

8. Apparatus according to Claim 7, **characterized in that** the insert (12) is formed by a non-woven material with a suction capability.

9. Apparatus according to one of Claims 1 to 8, **characterized in that** semiconductor elements (17) which react directly to the leak (6) are used as sensors.

10. Apparatus according to one of Claims 1 to 9, **characterized in that** the means (5) is designed to hold a specific leakage amount.

11. Apparatus according to one of Claims 1 to 10, **characterized in that** the means (5) has a temperature sensor (20).

12. Apparatus according to one of Claims 1 to 11, **characterized in that**, in the case of an element (30) having an insert (12) composed of a material which can swell, the volume increase thereof is detected.

13. apparatus according to Claim 12, **characterized in that** the volume increase operates an electrical switch (15).

14. Apparatus according to one of Claims 1 to 13, **characterized in that** the means (5) is provided with guidance elements (21) which feed the leak to the capillary gap (18) or the insert (12).

15. Use of an apparatus according to one of Claims 1 to 14 for detection of a leak at seals of technical appliances, in particular at a seal which surrounds a shaft or a rod.

## Revendications

1. Dispositif avec un dépôt pour la détection d'une fuite, dans lequel le dépôt est un élément séparé, pouvant être installé à proximité immédiate de la sortie de la fuite, avec au moins un détecteur intégré au dépôt qui mesure la fuite survenue dans le dépôt, et l'élément (30) comprend au moins une fente capillaire (18) ou un insert absorbant (12) et le détecteur (31, 13, 14, 15, 17) mesure la fuite survenue dans la fente capillaire (18) ou dans l'insert (12) et transmet les valeurs mesurées à une unité d'évaluation et de signalisation (8), **caractérisé en ce qu'**il se compose d'une unité électronique et **en ce qu'**il est rassemblé avec le dépôt (5) en un élément de construction.

2. Dispositif selon la revendication 1, **caractérisé en ce que** l'alimentation électrique de l'unité d'évaluation (8) est effectuée au moyen d'un générateur assemblé à l'arbre rotatif.

3. Dispositif selon la revendication 1, **caractérisé en ce que** l'alimentation électrique de l'unité d'évaluation (8) est effectuée au moyen d'un aimant (10) monté sur un arbre rotatif (4), qui induit un courant en coopération avec une unité de bobine statique (11).

4. Dispositif selon l'une quelconque des revendications 1 à 3, **caractérisé en ce que** les signaux de l'unité d'évaluation (8) sont transmis sans fil à un appareil d'affichage (9).

5. Dispositif selon l'une quelconque des revendications 1 à 4, **caractérisé en ce que** le dépôt (5) est muni d'un ou de plusieurs détecteurs (31, 13, 14, 15, 17), qui émet ou émettent des signaux d'avertissement optiques ou acoustiques d'abord lorsqu'il apparaît une première fuite (6) et ensuite lorsqu'un niveau de remplissage prédéterminé est atteint.

6. Dispositif selon l'une quelconque des revendications 1 à 5, **caractérisé en ce que** le dépôt (5) comporte une fente capillaire (18), qui est formée entre deux plaques de condensateur (13) disposées tout près l'une de l'autre.

7. Dispositif selon l'une quelconque des revendications 1 à 5, **caractérisé en ce que** le dépôt (5) comprend un insert absorbant (12).

8. Dispositif selon la revendication 7, **caractérisé en ce que** l'insert (12) est formé par une étoffe nappée absorbante.

9. Dispositif selon l'une quelconque des revendications 1 à 8, **caractérisé en ce que** l'on utilise comme détecteurs des éléments semi-conducteurs (17) réagissant directement à la fuite (6).

10. Dispositif selon l'une quelconque des revendications 1 à 9, **caractérisé en ce que** le dépôt (5) est conçu pour contenir une quantité de fuite déterminée.

11. Dispositif selon l'une quelconque des revendications 1 à 10, **caractérisé en ce que** le dépôt (5) comprend un capteur de température (20).

12. Dispositif selon l'une quelconque des revendications 1 à 11, **caractérisé en ce que**, dans le cas d'un élément (30) avec un insert (12) en un matériau gonflant, on détecte l'augmentation de volume de celui-ci.

13. Dispositif selon la revendication 12, **caractérisé en ce qu'**un interrupteur électrique (15) est actionné par l'augmentation de volume.

14. Dispositif selon l'une quelconque des revendications 1 à 13, **caractérisé en ce que** le dépôt (5) est muni d'éléments conducteurs (21), qui conduisent la fuite à la fente capillaire (18) ou à l'insert (12).

15. Utilisation d'un dispositif selon l'une quelconque des revendications 1 à 14 pour la détection d'une fuite à des joints d'étanchéité d'appareils techniques, en particulier à un joint d'étanchéité entourant un arbre ou une tige.
